Europäisches Patentamt

European Patent Office

Office européen des brevets

(11) Veröffentlichungsnummer: **0 254 024 B1**

(19)

(12) # EUROPÄISCHE PATENTSCHRIFT

(45) Veröffentlichungstag der Patentschrift: 09.10.91

(51) Int. Cl.5: **C02F 11/10**, C02F 11/12

(21) Anmeldenummer: 87108566.8

(22) Anmeldetag: 13.06.87

(54) **Verfahren zum Konvertieren von Klärschlamm-Filterkuchen durch Pyrolyse zu Öl, Gas und Koks und Anlage zur Durchführung des Verfahrens.**

(30) Priorität: 23.07.86 DE 3624877
29.05.87 DE 3718133

(43) Veröffentlichungstag der Anmeldung:
27.01.88 Patentblatt 88/04

(45) Bekanntmachung des Hinweises auf die Patenterteilung:
09.10.91 Patentblatt 91/41

(84) Benannte Vertragsstaaten:
AT CH DE FR GB LI

(56) Entgegenhaltungen:
EP-A- 0 038 420      EP-A- 0 175 847
DE-A- 3 221 495      DE-A- 3 513 159
DE-A- 3 513 541      FR-A- 2 156 571

(73) Patentinhaber: Werner & Pfleiderer GmbH
Theodorstrasse 10 Postfach 30 12 20
W-7000 Stuttgart 30(DE)

(72) Erfinder: Hinger, Klaus-Jürgen, Prof. Dr.-Ing.
Im unteren Kienle 12
W-7000 Stuttgart 1(DE)

(74) Vertreter: Rau, Manfred, Dr. Dipl.-Ing. et al
Rau & Schneck, Patentanwälte Königstrasse 2
W-8500 Nürnberg 1(DE)

## Beschreibung

Die Erfindung betrifft ein Verfahren nach dem Oberbegriff des Anspruches 1 oder 2 und eine Anlage nach dem Oberbegriff der Ansprüche 4 oder 5.

Klärschlamm fällt bei der Reinigung von Abwasser in Kläranlagen als an sich unerwünschtes Abfallprodukt an. Er wurde früher in der Landwirtschaft als Dünger ausgebracht, was heute noch als die einfachste und kostengünstigste Entsorgung gilt. Infolge der hohen Gehalt an Schwermetallen im Klärschlamm, insbesondere bei Klärschlamm aus großen kommunalen Kläranlagen, wurde die landwirtschaftliche Verwertung stark eingeschränkt. Der größere Teil der Klärschlämme wird inzwischen auf Deponien gelagert bzw. in Verbrennungsanlagen verbrannt. Die Klärschlammverbrennung ist sehr aufwendig und belastet die Luft durch Schadstoffemissionen. Die Deponie von Klärschlamm ist zwar verhältnismäßig einfach; die Aufwendungen steigen aber ständig, da die Anforderungen an die Sicherheit der Ablagerung in den Deponien ständig zunehmen.

Aus der DE-A-3 221 495 sind bereits ein Verfahren und eine Anlage der gattungsgemäßen Art bekannt, wobei aus Kammerfilterpressen kommender Klärschlamm-Filterkuchen in einem Mahltrockner zerkleinert und dann einem Drehrohrofen zur Konvertierung zugeführt wird. Diese Konvertierung ist ein Pyrolyse-Verfahren, bei dem unter völligem oder weitgehendem Luftabschluß ein Verschwelen des Klärschlamms stattfindet. Durch eine sogenannte Niedertemperaturpyrolyse, d.h. durch eine Konvertierung bei Temperaturen um 320°C entsteht aus den Abfällen ölhaltiges Gas und brennbarer Koks. Das Öl wird aus dem ölhaltigen Gas durch Kondensation gewonnen. Der Koks wird in einem Ofen verbrannt; die hierbei entstehenden heißen Rauchgase werden zur Beheizung des Drehrohr-Konvertierungsofens und des Mahltrockners eingesetzt. Hinsichtlich der Wärmerückgewinnung, d.h. hinsichtlich der Energiebilanz des Gesamtprozesses und hinsichtlich der Exaktheit der Vefahrensführung ist das bekannte Verfahren noch nicht befriedigend. Die bekannte Anlage ist darüber hinaus nicht flexibel hinsichtlich unterschiedlicher anfallender und zu verarbeitender Klärschlamm-Mengen.

Aus der EP-A-0 175 847 ist ein Verfahren zur indirekten Trocknung von Klärschlamm bekannt, wobei der Klärschlamm vorentwässert und vorgewärmt wird und eine anschließende zweistufige Trocknung vorgenommen wird. In der ersten Stufe erfolgt die Trocknung unter Teil-Vakuum, während in der zweiten Stufe die Trocknung unter Atmosphärendruck oder Überdruck erfolgt. Hiermit soll im Vergleich zu einstufigen Trocknungsverfahren erreicht werden, die Energiebilanz des Trocknungsvorganges zu verbessern.

Aus der FR-A-2 156 571 (entsprechend DE-A-2 150 414) ist es bekannt, Müll und Klärschlamm gleichzeitig zu verbrennen, wobei der Klärschlamm vorab in einer zweistufigen Verdampfungseinrichtung eingedickt wird. Die erste Stufe ist als Vakuumverdampfer ausgebildet. Die zweite Stufe ist als Dünnschichtverdampfer ausgebildet, der einen heizflächenabkratzenden rotierenden Rührer aufweist. Der eingedickte Klärschlamm wird zusammen mit Müll verbrannt. Die zweistufige Teil-Trocknung dient der Verbesserung der Energiebilanz.

Aus der DE-A1-3 513 541 ist eine einstufige Trocknung und anschließende Pyrolyse von Klärschlamm bekannt, bei der der Schlamm während der Trocknung und Pyrolyse zwangsgefördert und umgewälzt wird.

Der Erfindung liegt die Aufgabe zugrunde, ein Verfahren der gattungsgemäßen Art zu schaffen, das hinsichtlich der Energiebilanz und hinsichtlich der Exaktheit der Verfahrensführung besonders günstig durchführbar ist und eine Anlage der gattungsgemäßen Art zu schaffen, die besonders einfach aufgebaut und besonders vielseitig einsetzbar ist.

Die Aufgabe wird bei einem Verfahren der gattungsgemäßen Art durch die Merkmale im Kennzeichnungsteil des Anspruches 1 bzw. Anspruches 2 gelöst. Durch die Aufteilung der Entwässerung der Klärschlamm-Filterkuchen in zwei Stufen kann aus der zweiten Stufe, der Eindampfung unter Normaldruck und entsprechend hohen Temperaturen stammende ansonsten nicht verwertbare Abwärme zu einer Vortrocknung unter Vakuum oder alternativ zu einer Vortrocknung durch Verdunstung in der Regel unter Atmosphärendruck verwendet werden. Durch die Zwangsförderung und Zwangsumwälzung in definierten Teilströmen wird erreicht, daß die einzelnen Klärschlammteile gleichmäßig den wärmetauschenden Flächen zugeführt werden, wodurch ein besonders gleichmäßiger Wärmeaustausch in besonders kurzer Zeit erreicht wird und wodurch insbesondere Überhitzungen verhindert werden. Durch Überhitzungen beim Konvertierungsprozeß könnten nämlich unerwünschte Aromate entstehen.

Der am Ende des Prozesses entstehende Koks kann in einer weiteren Verfahrensstufe vergast werden, wobei das entstehende Gas wiederum zur Heißgaserzeugung, also zur Erzeugung der zum Konvertieren und Entwässern notwendigen Wärme herangezogen wird. Der Koks kann auch abgezogen und für andere Heizzwecke außerhalb des Verfahrens verwendet werden. Die bei der Koksvergasung anfallende Asche bzw. der anfallende Koks werden nach Anspruch 3 teilweise dem Zerkleinerungsprozeß zugeführt, wodurch dort bereits eine gewisse Erwärmung stattfindet und wodurch eine Einstellung des Klärschlamm-Filterkuchens auf eine gewünschte optimale Zusammensetzung und einen optimalen Feuchtigkeitsgehalt für die Zerkleinerung möglich ist.

Das anfallende Öl kann wiederum fremdverwendet werden oder auch in Diesel-Generator-Aggregaten direkt zur Stromerzeugung eingesetzt werden.

Die erfindungsgemäße Anlage ist wesentlich dadurch gekennzeichnet, daß sie in Modul-Bauweise aufgebaut ist, wobei alle Module gleich sind. Aus diesen Modulen werden die einzelnen für die Vakuum-Voreindampfung, die Rest-Eindampfung, die Konvertierung, gegebenenfalls für die Koksvergasung und für die Feststoff-Rückkühlung erforderlichen Apparate aufgebaut, wobei entsprechend dem durch den Wasserentzug abnehmenden Volumen die Zahl der einzelnen Module für einen einzelnen Apparat abnehmen kann. Des weiteren sind diese Module geeignet, zu unterschiedlich großen Anlagen zusammengestellt zu werden, so daß durch diese Modulbauweise ein außerordentlich flexibles System geschaffen worden ist.

Die Ansprüche 6 und 7 enthalten Maßnahmen, durch die das Zusammenfügen mehrerer Module zu einem Apparat ermöglicht bzw. erleichtert wird.

Durch die Maßnahmen nach Anspruch 8 wird in besonders einfacher Weise der gemeinsame Antrieb aller Förderorgane eines Moduls ermöglicht. Die Ansprüche 9 und 10 geben die bevorzugte Ausgestaltung der Förderorgane wieder. Insbesondere die Ausgestaltung nach Anspruch 10 ermöglicht eine besonders schonende Förderung und Umwälzung der Klärschlamm-Filterkuchen, ohne daß diese in unangemessener Weise Scherung ausgesetzt werden, da bei einer Scherung unerwünschte Verklumpungen eintreten.

Durch die Maßnahmen nach Anspruch 11 ist sichergestellt, daß der Einzug der Klärschlamm-Filterkuchen in die Rohre und die Übergabe von einer Lage Rohre zur nächsten Lage Rohre und der Austrag zuverlässig sichergestellt sind. Die Maßnahmen nach Anspruch 12 geben eine besonders einfache konstruktive Lösung hierfür an.

Die Ansprüche 13 und 14 geben Dimensionierungsbereiche an, innerhalb derer eine technisch und wirtschaftlich optimale Fertigung der Rohre und insbesondere der Förderorgane möglich ist und innerhalb derer eine günstige Förderung und ein günstiger Wärmeübergang sichergestellt ist.

Weitere Vorteile und Merkmale der Erfindung ergeben sich aus der nachfolgenden Beschreibung eines Ausführungsbeispiels anhand der Zeichnung. Es zeigt

Fig. 1 eine Anlage nach der Erfindung zur Durchführung des erfindungsgemäßen Verfahrens in schematisierter Darstellung,

Fig. 2 ein Modul zum Aufbau der einzelnen Apparate der erfindungsgemäßen Anlage in Seiten-Längs-Ansicht, teilweise aufgebrochen,

Fig. 3 eine Draufsicht auf den Modul nach Fig. 2 in teilweise aufgebrochener Darstellung,

Fig. 4 einen vertikalen Teilschnitt durch den Modul nach Fig. 2 im Zuführ- bzw. Ausgabebereich in gegenüber Fig. 2 stark vergrößerter Darstellung,

Fig. 5 einen Teilschnitt durch den Modul nach Fig. 2 im Übergabebereich in gegenüber Fig. 2 stark vergrößerter Darstellung,

Fig. 6 eine Stirnansicht eines Antriebsblocks in schematischer Darstellung,

Fig. 7 eine Teildarstellung eines Förderorgans,

Fig. 8 eine Teildarstellung eines weiteren Förderorgans,

Fig. 9 einen Teil der Anlage nach Fig. 1, wobei die einzelnen Apparate durch Module nach den Fig. 2 bis 6 aufgebaut sind und

Fig. 10 eine abgewandelte Ausführung einer Anlage nach der Erfindung.

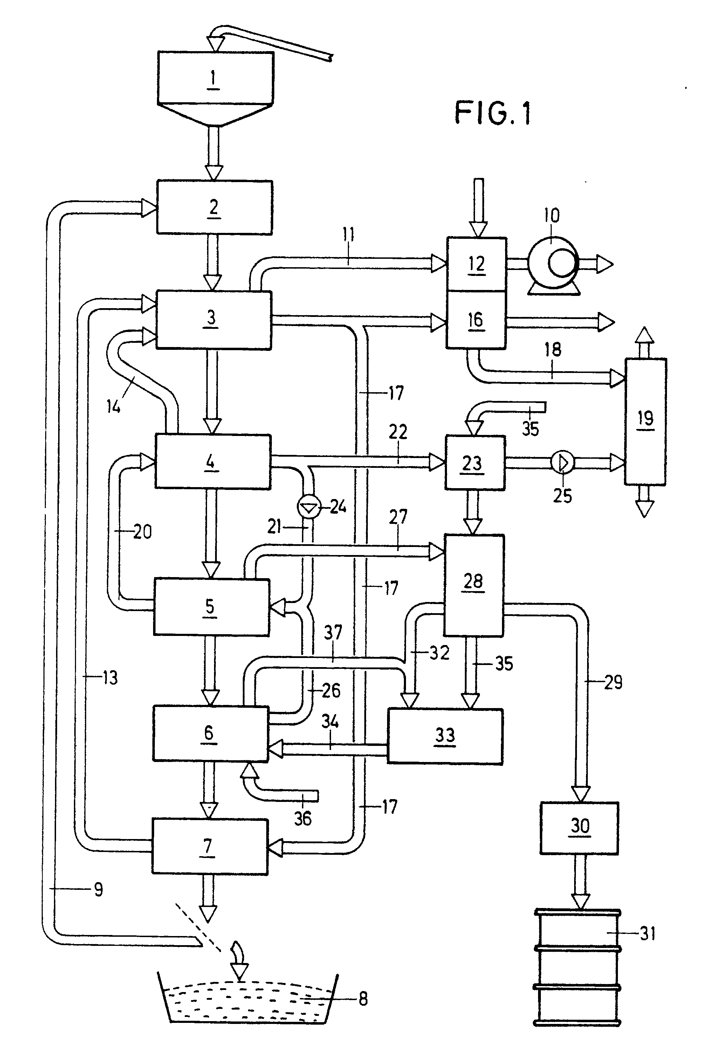

Wie sich aus Fig. 1 ergibt, sind hintereinander ein Silo 1 für Klärschlamm-Filterkuchen, ein Mischer und Zerkleinerer 2 für die Filterkuchen, ein Vakuum-Voreindampf-Apparat 3, ein Rest-Eindampfapparat 4, ein Konvertierungs-Apparat 5, ein Koks-Vergasungs-Apparat 6 und ein Feststoff-Kühl-Apparat 7 angeordnet. Der Weg, der Transport und die Transportrichtung durch diese Apparate sind jeweils durch Doppellinienpfeile angedeutet. Dem Silo werden Klärschlamm-Filterkuchen mit etwa 40% Trockensubstanzanteil, beispielsweise aus einer Kammerfilterpresse, zugeführt. Von dort werden sie in den Mischer und Zerkleinerer 2 überführt und nach einem Misch- und Zerkleinerungsprozeß, bei dem Asche oder Koks zugesetzt wird, dem Vakuum-Voreindampf-Apparat 3 zugeführt. Die Vakuum-Voreindampfung erfolgt bei einem Druck von etwa 3 kPa und einer Temperatur von ca 25°C. In Betracht kommt ein Druckbereich von 3 bis 10 kPa, also ein Temperaturbereich von 25 bis 45°C.

Hierbei wird der Trockensubstanzanteil des Filterkuchens auf etwa 45 bis 50% erhöht.

Dieser Filterkuchen gelangt dann in den Rest-Eindampf-Apparat 4, wo unter Normaldruck eine Resteindampfung erfolgt, so daß der austretende Filterkuchen etwa einen Trockensubstanzanteil von 95% hat.

Dieser Filterkuchen wird dann in den Konvertierungs-Apparat 5 übergeben, in dem eine sogenannte Niedertemperatur-Konvertierung des nunmehr wasserarmen KlärschlammFilterkuchens unter Wärmezufuhr erfolgt. Diese Niedertemperatur-Konvertierung erfolgt bei etwa 320° C. Hierbei entsteht Pyrolsegas und Koks als Zersetzungsprodukte. Der Koks als Feststoff wird dann in den Koks-Vergasungs-Apparat übergeben, wo in der üblichen Weise unter Zufuhr von Luft bzw. Sauerstoff und Wasserdampf unter gleichzeitiger Zufuhr und Erzeugung von Wärme Heizgas erzeugt wird. Die entstehende Asche wird dem Feststoff-Kühl-Apparat 7 zugeführt, und gekühlt. Die grobe Asche wird in einem Behälter 8 aufgefangen und zu einer Deponie verbracht. Ein kleiner Anteil der Asche, und zwar der Ascheanteil mit kleiner Partikelgröße, wird über eine Feststoff-Transport-Leitung 9 dem Mischer und Zerkleinerer 2 zugeführt, so daß auch dort bereits eine Teil-Vorwärmung der zu behandelnden Filterkuchen erfolgt. Wenn der Koks-Vergasungs-Apparat 6 entfällt, dann dient der FeststoffKühl-Apparat 7 zur Koks-Kühlung, der dann in dem Behälter 8 aufgefangen wird. Auch hier kann ein Teil des Kokses über die Feststoff-Transport-Leitung 9 dem Mischer und Zerkleinerer 2 zugeführt werden.

Zur Teil-Vorwärmung des zu behandelnden Filterkuchens wird dem Mischer und Zerkleinerer 2 heißer Koks, oder- bei Vergasung des Kokses - heiße Asche jeweils mit einer Temperatur von ca. 150° C zugeführt und mit dem Klärschlamm-Filterkuchen vermischt. Es entsteht hierbei eine Mischtemperatur von ca. 80° C, ohne daß der Mischer und Zerkleinerer 2 gesondert vorgewärmt werden muß. Bevorzugt wird dem Klärschlamm-Filterkuchen Koks zugeführt, weil hierdurch eine effektivere Vortrocknung des Klärschlammes erreicht wird. In diesem Fall entfällt - wie bereits erwähnt - der Koks - Vergasungs-Apparat 6.

Der im Vakuum-Voreindampf-Apparat 3 notwendige Unterdruck wird über eine Vakuum-Pumpe 10, üblicherweise eine Wasserringpumpe, erzeugt. Der bei dieser Voreindampfung enstehende Brüden wird mittels der Vakuum-Pumpe 10 über eine Vakuum-Leitung 11 durch einen Kondensator 12 abgezogen. Das austretende Kondensat wird als Abwasser der Kläranlage zugeführt.

Die für die Vakuum-Voreindampfung erforderliche Wärme wird mittels Heißwasser aus dem Feststoff-Kühl-Apparat 7 und mittels Brüden aus dem Rest-Eindampf-Apparat 4 zugeführt. Hierzu ist entsprechend eine den Feststoff-Kühl-Apparat 7 mit dem Vakuum-Voreindampf-Apparat 3 verbindende Heißwasserleitung 13 und entsprechend eine den Rest-Eindampf-Apparat 4 mit dem VakuumVoreindampf-Apparat 3 verbindende Brüden-Leitung 14 vorgesehen. Heißwasser und Brüden haben jeweils eine Temperatur von etwa 100°. Das aus dem Vakuum-Voreindampf-Apparat austretende Warmwasser von etwa 70° wird zu einem kleinen Teil über eine Warmwasser-Wegführleitung einem Kühler 16 zugeführt und von dort als Abwasse in eine Kläranlage weitergeführt. Der größere Teil des Warmwassers wird über eine Rücklauf-Leitung 17 wieder dem Feststoff-Kühl-Apparat 7 zugeführt, wo es wieder erhitzt und als Heißwasser über die Leitung 13 dem Vakuum-Voreindampf-Apparat 3 zugeführt wird. Der Kondensator 12 und der Kühler 16 sind in dieser Reihenfolge hintereinander in einen Kühlwasserstrang 18 geschaltet. Dieses Kühlwasser wird einem Rauchgaswäscher 19 zugeführt.

Die zur Rest-Eindampfung erforderliche Wärme wird über eine Mitteltemperatur-Rauchgas-Leitung 20 dem Rest-Eindampf-Apparat 4 vom Konvertierungs-Apparat 5 zugeführt. Die aus dem Apparat 4 austretenden, auf etwa 300° C abgekühlten Rauchgase werden teilweise dem Konvertierungs-Apparat 5 über eine Rauchgas-Rückführ-Leitung 21 wieder zugeführt. Der restliche Anteil wird über eine Rauchgas-Abführ-Leitung 22 einem Luftvorwärmer 23 zugeführt und dort nach Abgabe der Restwärme an Luft dem Rauchgaswäscher 19 zugeführt. In die Rauchgas-Rückführ-Leitung 21 und die Rauchgas-Abführ-Leitung 22 können im erforderlichen Umfang Pumpen 24, 25 geschaltet sein.

Die zur Niedertemperatur-Konvertierung erforderliche Wärme wird in Form heißer Rauchgase von dem Koks-Vergasungs-Apparat 6 über eine Hochtemperatur-Rauchgasleitung 26 zugeführt. Diese Hochtemperatur-Rauchgase werden mit den über die Leitung 21 rückgeführten Niedertemperatur-Rauchgasen gemischt, so daß die gewünschte Mischtemperatur erreicht wird. Bei der Niedertemperaturentgasung des weitgehend trockenen Klärschlamm-Filterkuchens wird dieser unter Freiwerden von ölhaltigen Dämpfen in Koks umgewandelt. Die ölhaltigen Dämpfe, das Pyrolysegas, werden über eine Pyrolysegas-Leitung 27 einem Ölkondensator 28 zugeführt. Das beim Kondensationsprozeß anfallende Öl wird über eine Ölleitung 29 und einen Ölkühler 30 einem Öllager 31 zugeführt. Das entstehende brennbare Gas wird über eine Gas-Leitung 32 abgezogen und einem Heißgaserzeuger zugeführt, wo es verbrannt wird. Die entstehenden Rauchgase werden über eine Rauchgas-Leitung 34 dem Koks-Vergasungs-Apparat 6 zugeleitet. Die im Heißgaserzeuger 33 erforderliche Verbrennungsluft wird über eine Luft-Leitung 35 zugeführt, die durch den Luftvorwärmer 23 und den Ölkondensator 28 geleitet ist, so daß sie dort jeweils unter gleichzeitiger Erwärmung zum Kühlen der Rauchgase bzw. des Pyrolysegases verwendet wird.

Die zur Koks-Vergasung erforderliche Wärme wird - wie bereits angedeutet - aus dem Heißgaserzeuger 33 über die Rauchgas-Leitung 34 in Form von Rauchgas mit einer Temperatur von etwa 850° C zugeführt. Die weiterhin zur Vergasung erforderliche Luft bzw. der erforderliche Sauerstoff einerseits und der erforderliche Dampf andererseits werden über eine Luft-Dampf-Leitung 36 in den Koks-Vergasungs-Apparat 6 eingeleitet.

Wenn eine Koksvergasung nicht erfolgen soll, und daher der Koks-Vergasungs-Apparat 6 entfällt, dann werden die aus dem Heißgaserzeuger 33 austretenden heißen Rauchgase direkt dem Konvertierungs-Apparat 5 zugeleitet. Außerdem ist eine Heizgas-Leitung 37 nicht erforderlich, die die bei der Koksvergasung enstehenden brennbaren Gase zum Heißgaserzeuger 33 leitet.

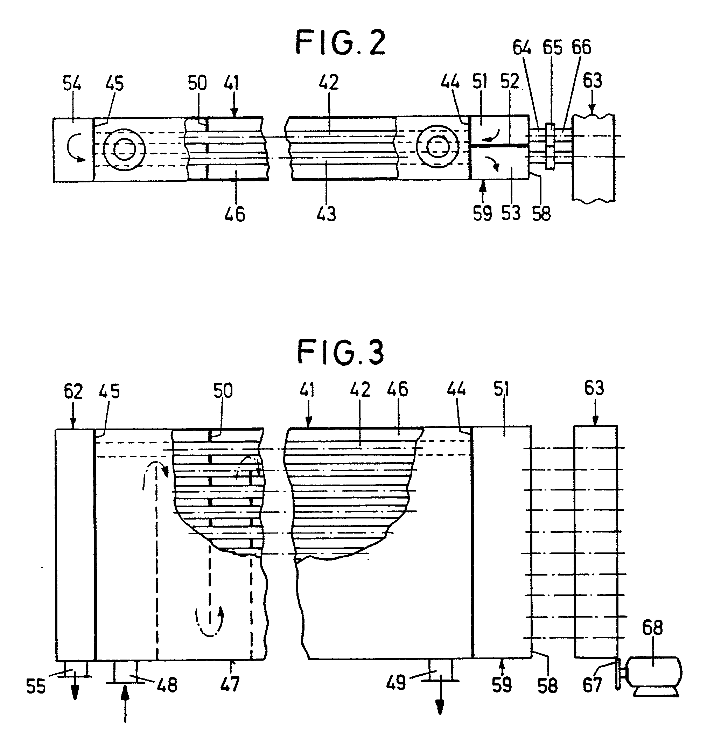

Die Apparate 3 bis 7 sind als modular aufgebaute Rohrbündel-Apparate ausgestaltet. Ein solcher Modul ist in den Fig. 2 und 3 dargestellt. Er weist ein etwa quaderförmiges Gehäuse 41 auf, in dem in zwei horizontalen Ebenen parallel zueinander Rohre 42, 43 angeordnet sind. Die Rohre 42, 43 sind an ihren Enden in Abschlußwänden 44, 45 gehalten und enden offen durch diese. Diese Abschlußwände 44, 45 begrenzen einen Wärmeübertragungsraum 46, in den von einer zu den Rohren 42, 43 parallelen Seitenwand 47 ein Einlaß-Stutzen 48 und ein Auslaß-Stutzen 49 münden. In dem Wärmeübertragungsraum 46 sind Trennwände 50 nach Art von Schikanen eingezogen, so daß das durch den Einlaß-Stutzen 48 eintretende Medium unter mehreren Umlenkungen im Kreuzstrom zu den Rohren 42, 43 bzw. dem in diesen geförderten Feststoff durch den Wärmeübertragungsraum 46 strömt. Auf einer - in den Fig. 2 und 3 rechten - Seite ist eine nur der Lage der oberen Rohre 42 zugeordnete Zuführkammer 51 für die Feststoffe. Unterhalb dieser Zuführkammer und von dieser durch einen Boden 52 getrennt, ist eine Ausgabekammer 53, in die die Rohre 43 der unteren Rohrlage einmünden.

Auf der den Kammern 51, 53 entgegengesetzten Seite der Rohre, also jenseits der Abschlußwand 45 ist eine Übergabekammer 54 ausgebildet, in der der aus den Rohren 42 der oberen Lage austretende Feststoff nach unten fällt und in die untere Lage von Rohren 43 übergeben wird. Aus der Übergabekammer 54 mündet ein Gasstutzen 55 aus, der in einer Seitenwand, beispielsweise der Seitenwand 47, angebracht ist. Durch diesen Stutzen 55 wird das in den Rohren 42, 43 bei der Behandlung enstehende Gas abgezogen.

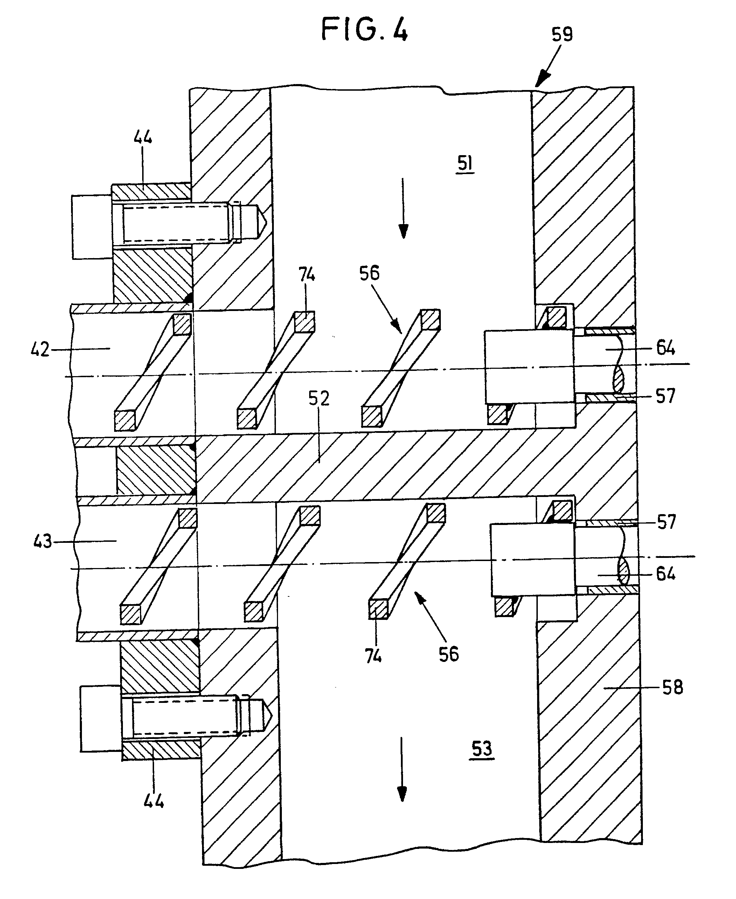

In allen Rohren 42, 43 sind kontinuierlich antreibbare, stetig fördernde Förderorgane 56 angeordnet. Diese Förderorgane sind - wie aus Fig. 4 hervorgeht - in entsprechenden Lagern 57 in einer Stirnwand 58 des die Zuführkammer 51 und die Ausgabekammer 53 aufnehmenden Zuführ- und Ausgabe-Gehäuses 59 gelagert. Wie ebenfalls aus Fig. 4 hervorgeht, ist dieses Gehäuse 59 an die Abschlußwand 44 angeschraubt.

An ihrem anderen Ende sind die Förderorgane 56 in Lagern 60 in einer äußeren Stirnwand 61 des die Übergabekammer 54 umgebenden Übergabegehäuses 62 frei drehbar gelagert.

Der Antrieb aller zu einem Modul gehörenden, also in einem Gehäuse 41 angeordneten Förderorgane 56 erfolgt gemeinschaftlich über einen Antriebsblock 63. Dieser Antriebsblock ist - wie aus den Fig. 2 und 3 hervorgeht - dem Zuführ- und Ausgabegehäuse 59 vorgeordnet. Die entsprechenden Antriebs-Wellenzapfen 64 der einzelnen Förderorgane 56 sind aus den Lagern 57 in der Stirnwand 58 hindurchgeführt und über entsprechende Kupplungen 65 mit den Abtriebswellen 66 des Antriebsblocks 63 verbunden.

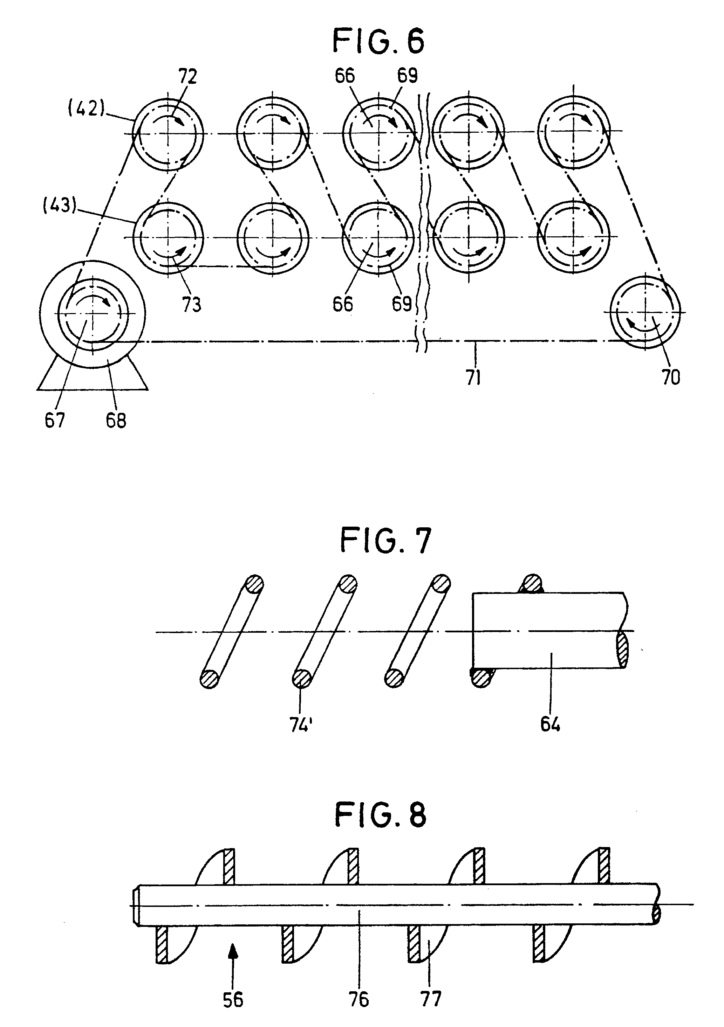

Wie aus Fig. 6 hervorgeht, werden die Abtriebswellen 66 von einem gemeinsamen Antriebsrad 67 angetrieben, das wiederum von einem Motor 68 angetrieben wird. Auf jeder Abtriebswelle 66 ist ein Kettenrad 69 drehfest angebracht. Um das ebenfalls als entsprechendes Kettenrad ausgebildete Antriebsrad 67 und ein Spannrad 70 und sämtliche Kettenräder 69 ist eine gemeinsame Antriebskette 71 geführt. Sie ist immer abwechselnd um ein Kettenrad 69 eines Förderorgans 56 in einem Rohr 42 und ein Kettenrad 69 eines Förderorgans 56 in einem Rohr 43 geführt, so daß die Drehrichtung 72 der Förderorgane 56 in den Rohren 42 entgegengesetzt zu der Drehrichtung 73 der Förderorgane 56 in den Rohren 43 ist. Hierdurch wird es möglich, die Förderorgane 56 in beiden Rohren 42 und 43 identisch auszubilden. Trotzdem erfolgt die Förderung in der oberen Lage von Rohren 42 aus der Zuführkammer 51 zur Übergabekammer 54 und in der unteren Lage von Rohren 43 aus der Übergabekammer 54 zur Ausgabekammer 53. Selbstverständlich kann die Drehantriebsrichtung auch für alle Förderorgane 56 identisch sein, wenn diese jeweils in den Rohren 42 und 43 unterschiedliche Steigung und damit von Haus aus unterschiedliche Förderrichtung bei gleicher Drehrichtung haben.

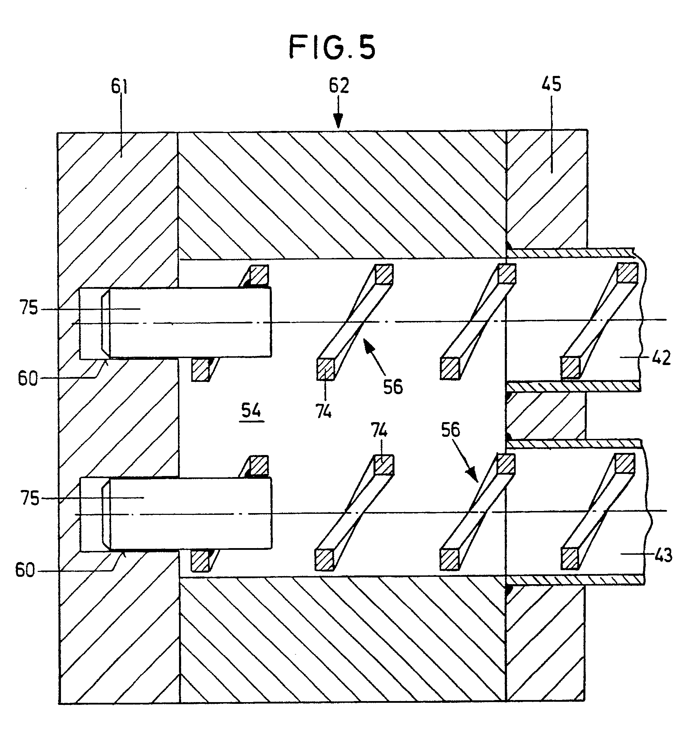

Bei der Ausgestaltung nach den Fig. 4 und 5 sind als Förderorgane 56 kernlose Schrauben-Förderorgane 74 vorgesehen, die aus Vierkant-Stab-Material mit quadratischem Querschnitt wie eine Schraubenfeder gewickelt sind. Derartige kernlose Schrauben-Förderorgane können in gleicher Weise aus Rundstabmaterial oder Rechteckstabmaterial oder Trapezquerschnittmaterial gebogen bzw. gewickelt werden. Diese Schrauben-Förderorgane 74 weisen an ihren im Übergabegehäuse 62 gelagerten Enden Lagerzapfen 75 auf, die in den Lagern 60 frei drehbar mit Axialspiel gelagert sind. Auf der dem Antriebsblock 63 zugewandten Seite sind diese Schrauben-Förderorgane 74 jeweils mit dem entsprechenden Antriebs-Wellenzapfen 64 versehen.

In Fig. 7 ist ein bereits erwähntes Schrauben-Förderorgan 74' teilweise dargestellt, das aus Rundstab-Material gewickelt ist. In Fig. 8 ist schließlich ein Teilabschnitt eines Förderorgans 56 dargestellt, das einen zylindrischen, sich über die volle Länge erstreckenden Kern 76 aufweist, auf den eine Schnecke 77 aus Blech aufgeschweißt ist. Wenn bei dieser Ausgestaltung die Förderorgane 56 insgesamt für eine ordnungsgemäße Fertigung zu lang werden, dann können einzelne Abschnitte in üblicher Weise mittels Kupplungsbuchsen aneinandergesetzt werden.

Entscheidend für die Förderorgane ist, daß eine schonende Förderung erfolgt, damit die Scherbeanspruchung des Filterkuchens möglichst gering gehalten wird. Je höher die Scherbeanspruchung des Filterkuchens ist, umso größer ist die unerwünschte und störende Verklumpung desselben.

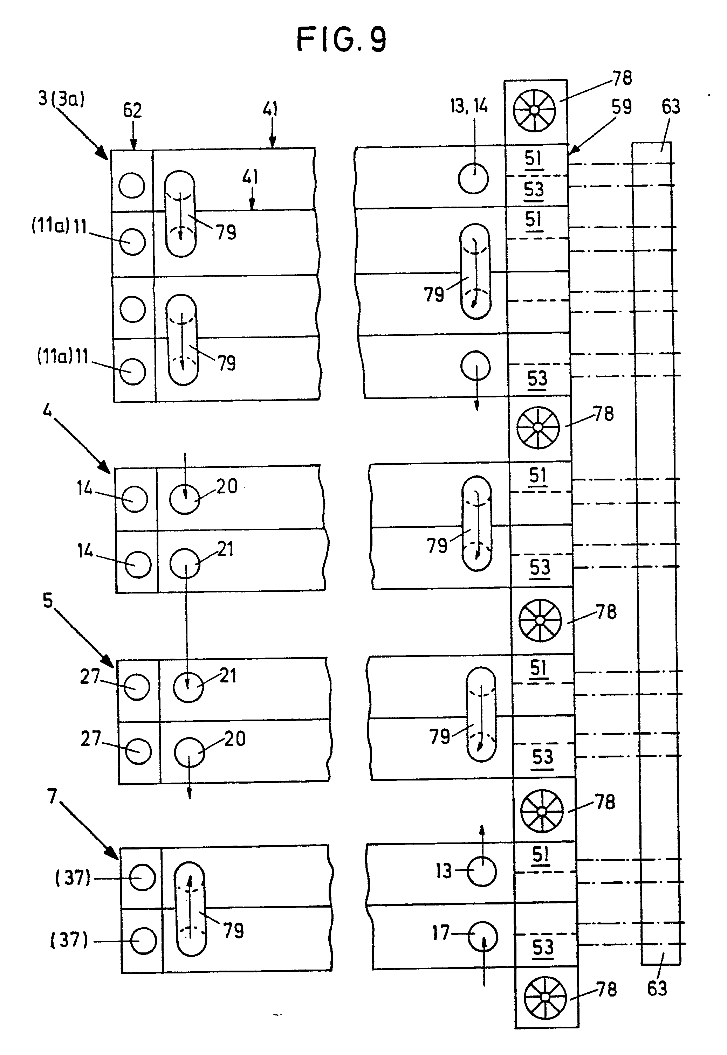

Aus Fig. 9 ist ersichtlich, wie aus den einzelnen Modulen eine Anlage, wie sie in Fig. 1 dargestellt ist, augebaut werden kann. Aus Gründen der Übersichtlichkeit ist in Fig. 9 der Koks-Vergasungs-Apparat 6 fortgelassen. Der Vakuum-Voreindampf-Apparat 3 ist aus vier Modulen aufgebaut, die aufeinandergesetzt sind, so daß jeweils eine Ausgabekammer 53 in die Zuführkammer 51 des nachgeordneten Moduls führt. Jedem Apparat 3 bzw. 4 bzw. 5 bzw. 7 ist eine Schleuse 78 vorgeordnet, die gegebenenfalls direkt an die letzte Ausgabekammer 53 des vorhergehenden Apparates angeschlossen ist. An die Stutzen 48, 49, 55 sind die Bezugsziffern für die oben zu Fig. 1 beschriebenen Leitungen gezeichnet. Im übrigen ist dargestellt, daß die Einlaß-Stutzen 48 und die Auslaß-Stutzen 49 mittels Rohrstutzen 79 miteinander verbunden sind.

Durchsatzsteigerungen werden durch Drehzahlerhöhung der Förderorgane 56 und/oder durch Parallelschalten von Modulen (Gehäusen 41) erreicht, während Verweilzeitvergrößerungen der Filterkuchen in den einzelnen Apparaten 3, 4, 5, 6, 7 durch Drehzahlerniedrigungen und/oder durch Hintereinanderschalten, d.h. Übereinanderlegen von Modulen erreicht werden. Letzteres ist in Fig. 9 dargestellt.

Die Niedertemperatur-Konvertierung erfolgt bei Temperaturen zwischen 250 und 330° C, bevorzugt bei 320° C. Die Rohre 42, 43 haben Längen zwischen 4 und 7 m und sind bevorzugt 6 m lang. Ihr Innendurchmesser sollte im Bereich von 60 bis 100 mm und bevorzugt im Bereich von 80 mm liegen. Die Schleusen 78 sind bevorzugt als Zellradschleusen ausgebildet und dienen primär dazu, den unkontrollierten Fluß der in den Rohren bei der Behandlung dienenden Gase von einem Apparat in den nächsten zu verhindern.

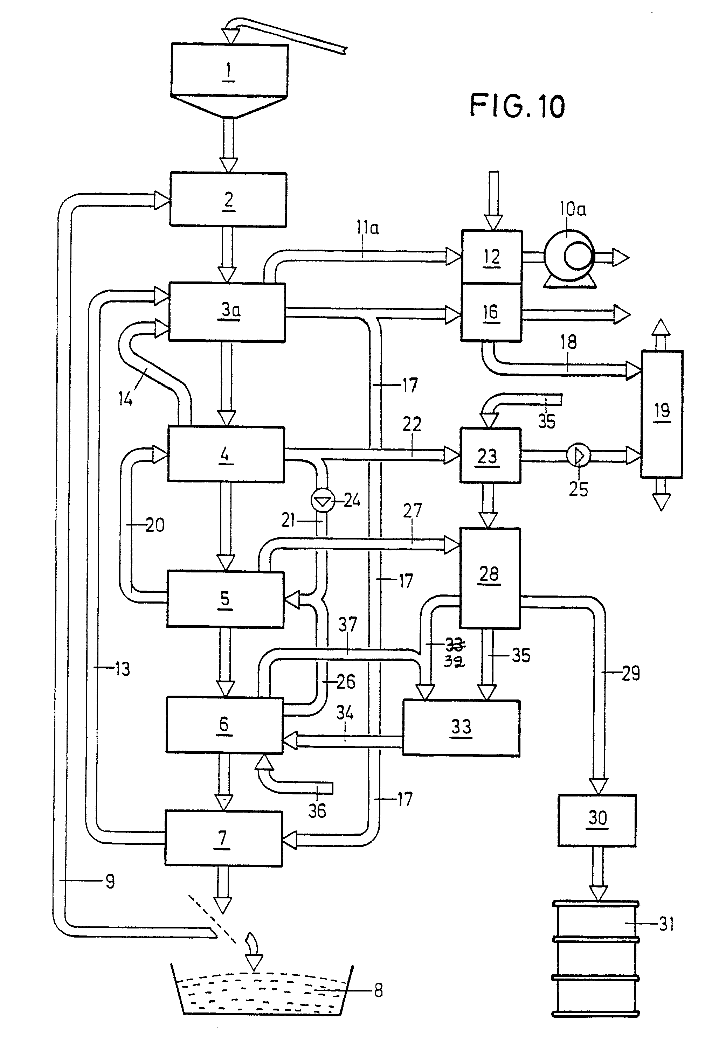

Wie sich aus Fig. 10 ergibt, kann anstelle eines Vakuum-Voreindampf-Apparates 3 ein Verdunstungs-Apparat 3a vorgesehen sein, der über eine Leitung 11a mit einem Gebläse 10a bzw. einem Kondensator 12 verbunden ist. Bei dieser· Ausgestaltung, bei der der Verdunstungs-Apparat 3a in gleicher Weise augestaltet ist, wie vorstehend beschrieben wurde, wird mittels des Gebläses 10a ein Luftstrom über den Filterkuchen geführt, der wie beim zuvor geschilderten Ausführungsbeispiel in dem Mischer und Zerkleinerer 2 zerkleinert und mit Asche oder Koks im Verhältnis 1:2 gemischt wurde. Diese vom Gebläse 10a erzeugte Luftstrom senkt den Wasserdampfpartialdruck über dem in Verdunstungs-Apparat 3a befindlichen Filterkuchen ab, so daß dieser langsam trocknet. Diese Verdunstung erfolgt bei einem Wasserdampfpartialdruck von etwa 30 kPa und einer Temperatur von ca. 70° C. In Betracht kommt ein Wasserdampfpartialdruckbereich von 10 bis 70 kPa, also ein Temperaturbereich von 45 bis 90° C. Hierbei wird der Trockensubstanzanteil des Filterkuchens - ohne Berücksichtigung der beigemischten trockenen Bestandteile wie Koks oder Asche - von etwa 40% (Anfangszustand vor Eingabe des Filterkuchens in den Mischer und Zerkleinerer 2) auf bis nahezu 60% erhöht. Diese Vortrocknung im Verdunstungs-Apparat 3a erfolgt unter Atmosphärendruck. Die im Luftstrom abgeförderte Feuchtigkeit wird in dem Kondensator 12 auskondensiert. Ansonsten stimmt die Anlage mit der in Fig. 1 beschriebenen vollständig überein, so daß auf die vorstehende Beschreibung verwiesen werden darf. Das gleiche gilt bezüglich des angewendeten Verfahrens.

Beide geschilderten Verfahren wenden in der ersten Stufe eine Überführung des Wassers in eine gasförmige Phase bei Temperaturen unterhalb der Siedetemperatur bei Atmosphärendruck an, wobei im einen Fall durch Druckabsenkung unter Teil-Vakuum der Siedepunkt des wassers erniedrigt wird, während im anderen Fall durch Abtransport des jeweils verdampften Wassers im Luftstrom, d.h. durch Absenken des Wasserdampfpartialdrukkes, eine verstärkte Verdunstung herbeigeführt wird.

**Patentansprüche**

1. Verfahren zum Konvertieren von Klärschlamm-Filterkuchen durch Pyrolyse zu Öl, Gas und Koks, wobei die noch Wasser enthaltenden Filterkuchen zerkleinert, dann unter Zufuhr von zumindest teilweise durch Abwärme aus mindestens einer nachgeordneten Verfahrensstufe gebildeter Wärme durch Verdampfung weitgehend entwässert, anschließend unter Umwälzen und Fördern und unter gleichzeitiger Zufuhr von zumindest teilweise durch Abwärme aus mindestens einer nachgeordneten Verfahrensstufe gebildeter Wärme unter Entgasung konvertiert und danach unter Wärmerückgewinnung abgekühlt werden, dadurch gekennzeichnet, daß die Entwässerung der Filterkuchen zweistufig erfolgt, wobei zuerst unter Teil-Vakuum eine Voreindampfung und anschließend unter Atmosphärendruck eine Resteindampfung durchgeführt wird, und daß die Filterkuchen zumindest während der Entwässerung und bei der Konvertierung einer Zwangsförderung und Zwangsumwälzung in definierten Teilströmen unterworfen werden.

2. Verfahren zum Konvertieren von Klärschlamm-Filterkuchen durch Pyrolyse zu Öl, Gas und Koks, wobei die noch Wasser enthaltenden Filterkuchen zerkleinert, dann unter Zufuhr von zumindest teilweise durch Abwärme aus mindestens einer nachgeordneten Verfahrensstufe gebildeter Wärme durch Verdampfung weitgehend entwässert, anschließend unter Umwälzen und Fördern und unter gleichzeitiger Zufuhr von zumindest teilweise durch Abwärme aus mindestens einer nachgeordneten Verfahrensstufe gebildeter Wärme unter Entgasung konvertiert und danach unter Wärmerückgewinnung abgekühlt werden, dadurch gekennzeichnet, daß die Entwässerung der Filterkuchen zweistufig erfolgt, wobei zuerst eine Vortrocknung durch Verdunstung des Wassers mittels eines über den Filterkuchen geführten Luftstromes und anschließend eine Resteindampfung jeweils unter Atmosphärendruck durchgeführt wird, und daß die Filterkuchen zumindest während der Entwässerung und bei der Konvertierung einer Zwangsförderung und Zwangsumwälzung in definierten Teilströmen unterworfen werden.

3. Verfahren nach Anspruch 1 oder 2, dadurch gekennzeichnet, daß nach der Konvertierung vorhandene Feststoffe teilweise rückgeführt und beim Zerkleinern der Filterkuchen zugesetzt werden.

4. Anlage zur Durchführung des Verfahrens nach Anspruch 1 oder 3 mit einem Zerkleinerer (2), einem Eindampf-Apparat (3, 4) und einem Konvertierungs-Apparat (5), dadurch gekennzeichnet, daß mindestens ein Vakuum-Voreindampf-Apparat (3) und ein diesem nachgeschalteter Rest-Eindampf-Apparat (4) vorgesehen sind und daß die Apparate (3, 4, 5, 6, 7) als Rohrbündel-Apparate in Form von Modulen mit einer Förderung der Filterkuchen durch die Rohre (42, 43) der Rohrbündel ausgebildet sind, wobei in jedem Rohr (42, 43) ein Zwangs-Förderorgan (56) angeordnet ist.

5. Anlage zur Durchführung des Verfahrens nach Anspruch 2 oder 3 mit einem Zerkleinerer (2), einem Eindampf-Apparat (3, 4) und einem Konvertierungs-Apparat (5), dadurch gekennzeichnet, daß mindestens ein an ein Gebläse (10a) angeschlossener Verdunstungsapparat (3a) und ein diesem nachgeschalteter Rest-Eindampf-Apparat (4) vorgesehen sind und daß die Apparate (3a, 4, 5, - 6, 7) als Rohrbündel-Apparate in Form von Modulen mit einer Förderung der Filterkuchen durch die Rohre (42, 43) der Rohrbündel ausgebildet sind, wobei in jedem Rohr (42, 43) ein Zwangs-Förderorgan (56) angeordnet ist.

6. Anlage nach Anspruch 4 oder 5, dadurch gekennzeichnet, daß jeder Modul in einem Gehäuse (41) parallel zueinander angeordnete Rohre (42, 43) aufweist, denen eine Zuführkammer (51) vorgeordnet und eine Ausgabekammer (53) nachgeordnet ist.

7. Anlage nach Anspruch 6, dadurch gekennzeichnet, daß jeder Modul eine geradzahlige Anzahl von übereinander angeordneten Lagen von Rohren (42, 43) aufweist, daß die Zuführkammer (51) und die Ausgabekammer (53) übereinander angeordnet sind und daß mindestens am anderen Ende der Rohre (42, 43) für zwei übereinander angeordnete Lagen von Rohren (42, 43) eine Übergabekammer (54) angeordnet ist.

8. Anlage nach Anspruch 4 oder 5, dadurch gekennzeichnet, daß die in den Rohren (42, 43) angeordneten Förderorgane (56) von einem gemeinsamen Antriebsblock (63) antreibbar sind.

9. Anlage nach Anspruch 4 oder 5, dadurch gekennzeichnet, daß die Förderorgane (56) als Schnecken-Förderorgane ausgebildet sind.

10. Anlage nach Anspruch 9, dadurch gekennzeichnet, daß die Förderorgane (56) als kernlose Schrauben-Förderorgane (74) ausgebildet sind.

11. Anlage nach Anspruch 6 oder 7, dadurch gekennzeichnet, daß die Förderorgane (56) mindestens teilweise in die Kammern (51, 53, 54) hineinragen.

12. Anlage nach Anspruch 6 oder 7, dadurch gekennzeichnet, daß die Förderorgane (56) in die Kammer bildenden Gehäusen (59, 62) gelagert sind.

**13.** Anlage nach Anspruch 4 oder 5, dadurch gekennzeichnet, daß der Innendurchmesser der Rohre (42, 43) 60 bis 100 mm beträgt.

**14.** Anlage nach Anspruch 4 oder 5, dadurch gekennzeichnet, daß die Länge der Rohre (42, 43) 4 bis 7 m beträgt.

## Claims

**1.** A process for converting sewage-sludge filter cakes into oil, gas and coke by pyrolysis, wherein the filter cakes, still containing water, are comminuted then largely dewatered by evaporation with the supply of heat formed at least partially by waste heat from at least one subsequent process step, then converted with carbonization, while being circulated and conveyed and with the simultaneous supply of heat formed at least partially by waste heat from at least one subsequent process step, and afterwards cooled with recovery of heat, characterized in that the dewatering of the filter cakes is effected in two stages, a preliminary evaporation first being carried out under partial vacuum and then a residual evaporation at atmospheric pressure, and that, at least during the dewatering and during the conversion, the filter cakes are subjected to a forced conveying and forced circulation in defined partial streams.

**2.** A process for converting sewage-sludge filter cakes into oil, gas and coke by pyrolysis, wherein the filter cakes, still containing water, are comminuted then largely dewatered by evaporation with the supply of heat formed at least partially by waste heat from at least one subsequent process step, then converted, with carbonization, while being circulated and conveyed and with the simultaneous supply of heat formed at least partially by waste heat from at least one subsequent process step and then cooled with recovery of heat, characterized in that the dewatering of the filter cakes is effected in two stages, a preliminary drying first being carried out by evaporation of the water by means of a stream of air conveyed over the filter cake and then a residual evaporation at atmospheric pressure, and that, at least during the dewatering and during the conversion, the filter cakes are subjected to forced conveying and forced circulation in defined partial streams.

**3.** A process according to claim 1 or 2, characterized in that solids present after the conversion are partially recycled and added to the filter cakes during the comminution.

**4.** A plant for carrying out the process according to claim 1 or 3, having a comminuter (2), an evaporating apparatus (3, 4) and a converting apparatus (5), characterized in that at least one vacuum preliminary evaporating apparatus (3) and one residual evaporating apparatus (4) following this are provided and that the apparatuses (3, 4, 5, 6, 7) are constructed as tube package apparatuses in the form of modules with conveying of the filter cakes through the tubes (42, 43) of the nests of tubes, a forced conveying member (56) being disposed in each tube (42, 43).

**5.** A plant for carrying out the process according to claim 2 or 3 having a comminuter (2), an evaporating apparatus (3, 4) and a converting apparatus (5), characterized in that at least one evaporating apparatus (3a) connected to a blower (10a) and a residual evaporating apparatus (4) following this are provided and that the apparatuses (3a, 4, 5, 6, 7) are constructed as tube package apparatuses in the form of modules with conveying of the filter cakes through the tubes (42, 43) of the nests of tubes, a forced conveying member (56) being disposed in each tube (42, 43).

**6.** A plant according to claim 4 or 5, characterized in that each module comprises tubes (42, 43) arranged parallel to one another in a housing (41), which tubes are preceded by a feed chamber (51) and followed by a delivery chamber (53).

**7.** A plant according to claim 6, characterized in that each module comprises an even number of layers of tubes (42, 43) disposed one above the other, that the feed chamber (51) and the delivery chamber (53) are arranged one above the other and that a transfer chamber (54) for two layers of tubes (42, 43) arranged one above the other is disposed at least at the other end of the tubes (42, 43).

**8.** A plant according to claim 4 or 5, characterized in that the conveying members (56) arranged in the tubes (42, 43) can be driven by a common drive unit (63).

**9.** A plant according to claim 4 or 5, characterized in that the conveying members (56) are constructed in the form of screw conveyor members.

**10.** A plant according to claim 9, characterized in that the conveying members (56) are constructed in the form of coreless screw conveyor members (74).

**11.** A plant according to claim 6 or 7, characterized in that the conveying members (56) project at least partially into the chambers (51, 53, 54).

**12.** A plant according to claim 6 or 7, characterized in that the conveying members (56) are mounted in housings (59, 62) forming the chambers.

**13.** A plant according to claim 4 or 5, characterized in that the internal diameter of the tubes (42, 43) is 60 to 100 mm.

**14.** A plant according to claim 4 or 5, characterized in that the length of the tubes (42, 43) is 4 to 7 m.

**Revendications**

**1.** Procédé de conversion des tourteaux de filtrage de bornes d'épuration, par pyrolyse, en huile, gaz et coke, les tourteaux de filtrage renfermant encore de l'eau étant tout d'abord broyés, puis, dans une large mesure, asséchés par vaporisation avec amenée de chaleur au moins partiellement produite par de la chaleur de récupération d'au moins une étape de procédé ultérieure, puis convertis, sous dégazage, en étant mis en circulation et en étant transportés avec amenée simultanée de chaleur produite au moins partiellement par de la chaleur de récupération d'au moins une étape de procédé ultérieure, et finalement refroidis avec récupération de la chaleur, procédé caractérisé en ce que l'assèchement des tourteaux de filtrage se fait en deux étapes, à savoir que l'on effectue tout d'abord une pré-vaporisation sous vide partiel et ensuite une vaporisation résiduelle sous pression atmosphérique, et en ce que les tourteaux de filtrage sont soumis, au moins au cours de l'assèchement et de la conversion, à un transport forcé et à une mise en circulation forcée en des flux partiels définis.

**2.** Procédé de conversion des tourteaux de filtrage de bornes d'épuration, par pyrolyse, en huile, gaz et coke, les tourteaux de filtrage renfermant encore de l'eau étant tout d'abord broyés, puis, dans une large mesure, asséchés par vaporisation avec amenée de chaleur au moins partiellement produite par de la chaleur de récupération d'au moins une étape de procédé ultérieure, puis convertis, sous dégazage, en étant mis en circulation et en étant transportés avec amenée simultanée de chaleur produite au moins partiellement par de la chaleur de récupération d'au moins une étape de procédé ultérieure, et finalement refroidis avec récupération de la chaleur, procédé caractérisé en ce que l'assèchement des tourteaux de filtrage se fait en deux étapes, à savoir que l'on effectue tout d'abord un pré-séchage par évaporation de l'eau à l'aide d'un flux d'air passant sur le tourteau de filtrage, et ensuite une vaporisation résiduelle, les deux étapes se faisant sous pression atmosphérique, et en ce que les tourteaux de filtrage sont soumis, au moins au cours de l'assèchement et de la conversion, à un transport forcé et à une mise en circulation forcée en des flux partiels définis.

**3.** Procédé selon la revendication 1 ou 2, caractérisé en ce que des substances solides restant après la conversion, sont partiellement recyclées en étant ajoutées au tourteau de filtrage lors du broyage.

**4.** Installation pour la mise en oeuvre du procédé selon la revendication 1 ou 3, comportant un broyeur (2), un appareil de vaporisation (3,4) et un appareil de conversion (5), caractérisée en ce que sont prévus au moins un appareil de pré-vaporisation sous vide (3) et à la suite, un appareil de vaporisation résiduelle (4), et en ce que les appareils (3,4,5,6,7) se présentent sous la forme d'appareils à faisceaux de tubes constitués de modules, avec un transport des tourteaux de filtrage au travers des tubes (42,43) des faisceaux de tubes, un organe de transport forcé (56) étant agencé dans chacun des tubes (42,43).

**5.** Installation pour la mise en oeuvre du procédé selon la revendication 2 ou 3, comportant un broyeur (2), un appareil de vaporisation (3,4) et un appareil de conversion (5), caractérisée en ce que sont prévus au moins un appareil d'évaporation (3a) relié à un ventilateur (10a) et à la suite, un appareil de vaporisation résiduelle (4), et en ce que les appareils (3a,4,5,6,7) se présentent sous la forme d'appareils à faisceaux de tubes constitués de modules, avec un transport des tourteaux de filtrage au travers des tubes (42,43) des faisceaux de tubes, un organe de transport forcé (56) étant agencé dans chacun des tubes (42,43).

**6.** Installation selon la revendication 4 ou 5, caractérisée en ce que chaque module comporte des tubes (42,43) agencés parallèlement dans un carter (41), tubes en amont desquels est montée une chambre d'alimentation (51) et en aval desquels est montée une chambre d'évacuation (53).

7. Installation selon la revendication 6, caractérisée en ce que chaque module comporte un nombre pair de couches de tubes (42,43) superposées, en ce que la chambre d'alimentation (51) et la chambre d'évacuation (53) sont disposées l'une au-dessus de l'autre, et en ce qu'à l'autre extrémité des tubes (42,43) est agencée au moins une chambre de transfert (54) pour deux couches superposées de tubes (42,43).

8. Installation selon la revendication 4 ou 5, caractérisée en ce que les organes de transport (56) disposés dans les tubes (42,43) peuvent être entraînés par un bloc d'entraînement commun (63).

9. Installation selon la revendication 4 ou 5, caractérisée en ce que les organes de transport (56) sont réalisés sous la forme d'organes de transport à vis sans fin.

10. Installation selon la revendication 9, caractérisée en ce que les organes de transport (56) sont réalisés sous la forme d'organes de transport à vis sans fin sans âme (74).

11. Installation selon la revendication 6 ou 7, caractérisée en ce que les organes de transport (56) pénètrent au moins partiellement dans les chambres (51,53,54).

12. Installation selon la revendication 6 ou 7, caractérisée en ce que organes de transport (56) sont montés par l'intermédiaire de paliers, dans les carters (59,62) formant des chambres.

13. Installation selon la revendication 4 ou 5, caractérisée en ce que le diamètre intérieur des tubes (42,43) peut valoir de 60 à 100 mm.

14. Installation selon la revendication 4 ou 5, caractérisée en ce que la longueur des tubes (42,43) peut valoir de 4 à 7 m.

# FIG.1

# FIG.2

# FIG.3

# FIG. 4

## FIG.5

EP 0 254 024 B1

# FIG. 6

# FIG. 7

# FIG. 8

# FIG. 9

# FIG.10